(19) Europäisches Patentamt
European Patent Office
Office européen des brevets

(11) **EP 1 491 788 B1**

(12) **EUROPEAN PATENT SPECIFICATION**

(45) Date of publication and mention
of the grant of the patent:
**16.03.2011 Bulletin 2011/11**

(51) Int Cl.:
**B60W 20/00** *(2006.01)*   **B60W 10/06** *(2006.01)*
**B60W 10/08** *(2006.01)*

(21) Application number: **04014475.0**

(22) Date of filing: **21.06.2004**

(54) **Motor vehicle propulsion system with coasting mode**

Fahrzeugsantriebssystem mit Freilauf-modus

Système de propulsion avec modalité de marche libre pour véhicule

(84) Designated Contracting States:
**AT BE BG CH CY CZ DE DK EE ES FI FR GB GR
HU IE IT LI LU MC NL PL PT RO SE SI SK TR**

(30) Priority: **25.06.2003 IT TO20030480**

(43) Date of publication of application:
**29.12.2004 Bulletin 2004/53**

(73) Proprietor: **FIAT AUTO S.p.A.**
**10135 Torino (IT)**

(72) Inventor: **Re Fiorentin, Stefano**
**10095 Grugliasco (Torino) (IT)**

(74) Representative: **Quinterno, Giuseppe et al**
**Jacobacci & Partners S.p.A.**
**Corso Emilia 8**
**10152 Torino (IT)**

(56) References cited:
**EP-A- 0 937 904     EP-A- 1 248 021
WO-A-00/66905     DE-A- 4 334 210
DE-A- 10 030 367     DE-A- 19 507 622**

**Description**

The present invention relates to a propulsion control system for a motor vehicle of the kind defined in claim 1.

DE 195 07 622 A discloses a control system of this kind performing a freewheeling control wherein under a preset vehicle speed the clutch is opened, and the freewheeling is cancelled if the brake is actuated.

EP 1 248 021 A1 discloses an electronic gearshift control unit predisposed to perform a gear change when with the current gear the engine torque does not allow to achieve a desired traction force.

An object of the invention is to provide an improved system of the above-defined kind. This object is achieved by propulsion control system of claim 1.

The propulsion control system of the invention makes it possible to abolish the so-called engine braking when the accelerator pedal is released whenever the motor vehicle is travellling at a speed less than a predetermined value, for example 80km/h. This makes it possible to achieve an appreciable reduction in fuel consumption.

In a motor vehicle in which the internal combustion engine is coupled to a reversible electrical machine operable to act as an electricity generator and an electric motor, and in which the internal combustion engine is associated with an electronic control unit, the said control means of the system according to the invention can be conveniently arranged to determine, by means of the said electronic control unit of the internal combustion engine, the extinguishing of the combustion engine whenever the accelerator is released, whilst the speed is less than the said predetermined value and the said clutch is disengaged, except when the clutch is disengaged for the purpose of gear changing, and then cause restarting of the combustion engine by means of the said electrical machine, now operating as a motor, and then re-engagement of the said clutch, as soon as the accelerator is again actuated.

Thanks to these characteristics it is possible to achieve a further significant reduction in fuel consumption.

As will become apparent more clearly hereinafter, further benefits in terms of reduction in fuel consumption can be achieved by performing in some conditions a control strategy which envisages a succession of "drive" and "release" phases, that is to say an alternation of phases in which drive is applied to the wheels and phases in which the clutch between the engine and the transmission is disengaged and the engine is turned off. This strategy, as will become clearer in the following description, must be performed in such a way as not to compromise the driving comfort, and to maintain the validation of the vehicle speed within a narrow range of values.

Further characteristics and advantages of the invention will become apparent from the following detailed description given purely by way of non-limitative example, with reference to the attached drawings, in which:

Figure 1 is a block diagram of a control system according to the invention;

Figure 2 is a diagram which illustrates the correlation, achieved in a system according to the invention, between the position of the accelerator pedal, the speed of the motor vehicle, and the ground traction force developed by the driving wheels;

Figure 3 is a further diagram which qualitatively shows an exemplary variation of the motor vehicle speed in dependence on the time, plotted along the abscissa, which can be achieved in a system according to the invention;

Figures 4 and 5 are flow diagrams which illustrate an algorithm for implementation of a drive-release control strategy which can be performed in a system according to the invention; and

Figure 6 is a further diagram which shows the correlation which can be achieved in a system according to the invention, between the speed of rotation of the engine shaft of the internal combustion engine, the speed ratio at the gearbox, the mean effective pressure of the engine and the specific fuel consumption.

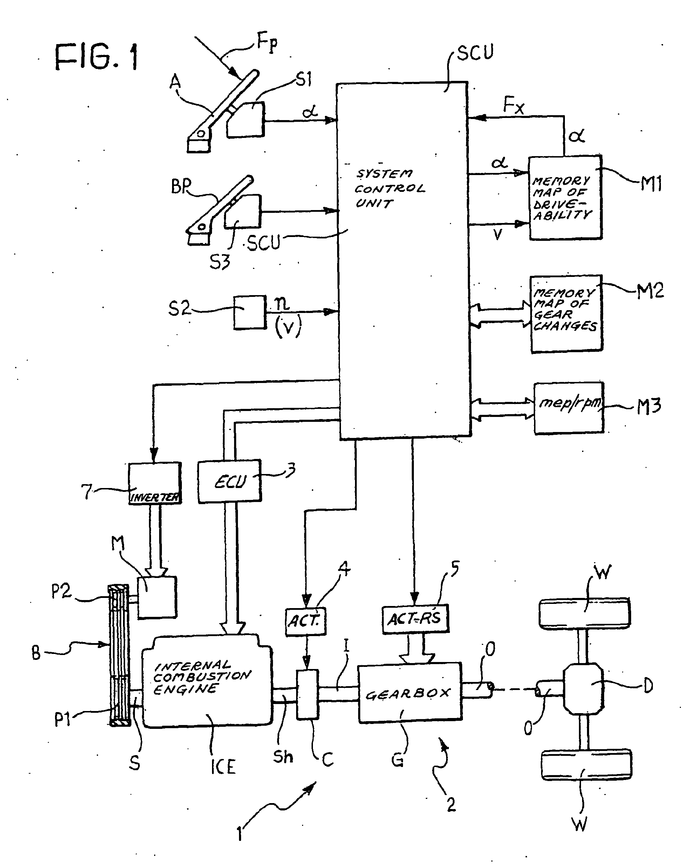

In Figure 1 the propulsion apparatus of a motor vehicle is generally indicated 1. In the embodiment illustrated the propulsion apparatus 1 comprises an internal combustion engine ICE the shaft Sh of which is connectable to a transmission 2 via a servo-controlled clutch C. The transmission 2 comprises a discrete ratio gearbox G of the meshing gear type, with an input shaft I and an output shaft O.

The input shaft I of the gearbox G is connectable to the shaft Sh of the engine ICE by means of the clutch C. The output shaft O of the gearbox G is coupled to a pair of driving wheels W by means of a differential D of type known *per se.*

The transmission arrangement described above and illustrated in Figure 1 is purely exemplary and therefore non-limitative.

The internal combustion engine ICE is associated with an electronic control unit (ECU) 3 of type known *per se.*

The clutch C is servo-controllable by means of an associated actuator device 4 which may be electrically or electrohydraulically controlled.

The gearbox G is associated with a plurality of electrically or electrohydraulically controlled actuator devices, generally indicated 5, able to cause the engagement and disengagement of the gears corresponding to the various speed ratios which can be achieved.

The propulsion control system schematically represented in Figure 1 includes a system electronic control unit SCU which is connected to the control unit 3 associated with the engine ICE as well as to the actuators 4 and 5 respectively associated with the clutch C and the gearbox G.

The propulsion control system further includes a control accelerator A which in the illustrated embodiment is of the traditional pedal type.

The accelerator A is associated with a sensor S1 able to provide the control unit SCU with electrical signals indicative of its position $\alpha$, for example in terms of percentage displacement between a stroke-beginning position and an end-of-stroke position.

The unit SCU is coupled to a further sensor S2 able to provide it with electrical signals indicative of the speed of rotation (number of revolutions n per unit time) of the engine shaft Sh of the engine ICE, or the speed v of the motor vehicle. If the sensor S2 provides electrical signals indicative of the speed of rotation of the shaft of the engine ICE the unit SCU can nevertheless deduce the speed v of the vehicle once the rolling ratio of the wheels, the instantaneous value of the gear ratio at the gearbox G, and the back axial ratio at the differential are known.

The motor vehicle has an associated braking system of type than *per se* which can be activated by means of a pedal-controlled device BP to which is associated a further position sensor S3 coupled to the system control unit SCU.

As will become more clearly apparent hereinafter in the present description, the system schematically illustrated in Figure 1 is arranged to control the propulsion apparatus 1 according to predetermined modes of operation as a function of the signals provided by the sensors S1, S2 and S3 (and from possible further sensors not illustrated).

In particular, according to the present invention, the system control unit SCU is arranged to acquire signals provided by the sensors S1, S2 and to determine, in ways which will be described, an instantaneous value of the traction force $F_x$ intended to be developed at the ground by the driving wheels W, corresponding to the instantaneous position $\alpha$ of the accelerator pedal A and to the instantaneous value of the vehicle speed v of the motor vehicle.

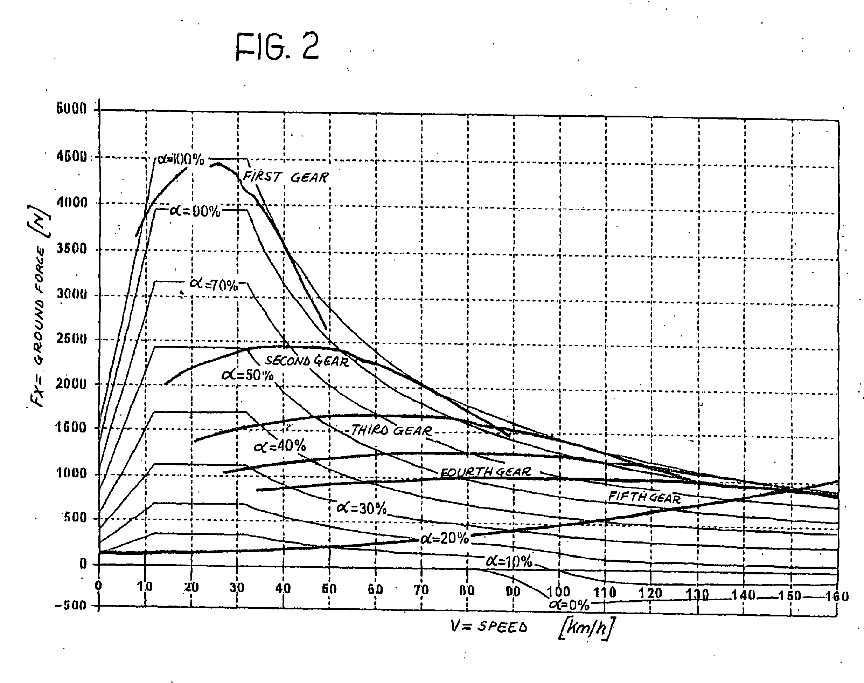

To this end the system control unit SCU is conveniently associated with a memory M1 in which are stored data which correlate the position $\alpha$ of the accelerator A and the motor vehicle speed v with the traction force $F_x$ which must be developed at the ground. These data define a "drivability" map or table, for example deduced from graphs of the type illustrated in Figure 2 relating to propulsion apparatus in which the internal combustion engine is associated with a five speed gearbox, that is one having five gear ratios.

From what has been explained up to now the control system according to the invention in fact works on a "drivability" map based on the dynamic variables of the motor vehicle itself, that is the ground force and the vehicle speed. Therefore, the system according to the invention makes it possible directly to manage, via the accelerator A, the ground force $F_x$ independently of the choice (made during the design stage) of the speed ratios of the gearbox G and the particular choice of the gear ratio during operation.

The system moreover makes it possible to achieve control arrangement not obtainable with conventional approaches, that is to say due to the fact that the ground force $F_x$ also depends on the speed v of the motor vehicle. It is thus possible to recover, at least partially, the power consumed by the effect of the resistance to motion of the motor vehicle, with improvements in terms of "brightness" of performance.

As mentioned above, the drivability map referred to the ground force makes the control imparted by the accelerator A substantially "independent" of the gear ratio selected at the gearbox: the control imparted through the accelerator A directly determines the strength of the ground force $F_x$, independently of the selected gear ratio.

The choice of the gear ratio is therefore no longer tied to subjective criteria, dependent on the personal driving style, but on the degree to which the force $F_x$ achieved corresponds to that effectively required by the driver by means of the accelerator A. The gear ratio can thus be chosen on the basis of an objective criterion, for example on the basis of minimisation of fuel consumption by the engine ICE.

To this end the system control unit SCU is conveniently associated with a further memory M2 in which are stored data able to define the speed ratio or gear to select at the gearbox G as a function of the ground force $F_x$ which must be developed by the driving wheels W, and the speed v of the motor vehicle. The unit SCU is arranged to select the gear ratio to use on the basis of data retained in the said memory M2.

In this are conveniently stored data which represent, in the Fx, v plane, the boundary lines for the gear changes which are generally different for ascending or "up" gear changes (for example from 2nd to 3rd gear) than for the descending or "down" shifts (for example from 3rd to 2nd gear).

The gear change boundary lines are determinable on the basis of a predetermined criterion, for example minimisation of fuel consumption.

The control system according to the invention allows a new and different management of the so-called engine braking, of significant importance for the purpose of reduction of fuel consumption.

For the reduction of fuel consumption the system according to the invention conveniently abolishes engine braking during the phases in which the accelerator pedal A is released whilst the motor vehicle is travelling at a speed v less than a predetermined value, for example 80km/ph as in normal conditions of urban use.

Conveniently, the drivability map is arranged in such a way that for values of the speed v less than the said predetermined value the accelerator pedal A manages only the non- negative ground force $F_x$ (see Figure 2). For these values of the speed v the clutch C (Figure 1) is promptly released each time the accelerator pedal A is released ("free wheel" function) or when it is not activated (% actuation position $\alpha = 0\%$).

The clutch C is, however, then promptly re-engaged as soon as the brake pedal BP is actuated to reinstate the engine braking effect, or as soon as the accelerator pedal A is pressed again.

With reference to Figure 1, in the exemplary embodiment illustrated, a belt transmission B having pulleys P1 and P2 couples the engine shaft Sh of the internal combustion engine ICE to a reversible electric machine M operable to act as an electricity generator (alternator) and as an electric motor (starter). The machine M is associated with an active bridge circuit (inverter) 7 controlled by the system control unit SCU.

When the machine M operates as an electric motor it is able to replace the usual starter motor coupled to the internal combustion engine.

The system control unit SCU is arranged to cause the internal combustion engine ICE to be turned off by the engine management unit ECU 3 whenever the accelerator A is released for more than a predetermined time and the clutch C is disengaged, except when this clutch is disengaged for performing a gear change. The unit SCU is moreover arranged to cause a re-starting of the internal combustion engine ICE, by means of the machine M, functioning as a motor, and then re-engagment of the clutch C, as soon as the accelerator A is actuated again.

The arrangements described above make it possible to achieve significant advantages in terms of reduction of fuel consumption whilst in fact requiring an extremely modest increase in overall cost of the system.

According to a further characteristic the system control unit SCU is further conveniently arranged to detect situations in which the motor vehicle speed v is maintained within predetermined limits below a predetermined value (for example 80km/h) and in these situations to cause development of a ground force $F_x$ varying in a predetermined manner about an average value corresponding to the value of the motor vehicle speed.

In these situations the system control unit SCU is arranged to perform a drive-release strategy where release phases, in which the clutch C is disengaged and the motor ICE is turned off, alternate with drive phases or application of traction force to the wheels, in which the engine ICE is started (or re-started) and the clutch C is engaged.

This strategy makes it possible to obtain full benefit of the so-called "free wheel" function, with a significant reduction in fuel consumption.

As will become apparent more clearly hereinafter this automatic drive-release strategy must be performed in such a way as not to generate discomfort and to maintain the variations in the speed of the vehicle within a limited range of values $+\Delta v$, for example within $\pm 2$ km/h.

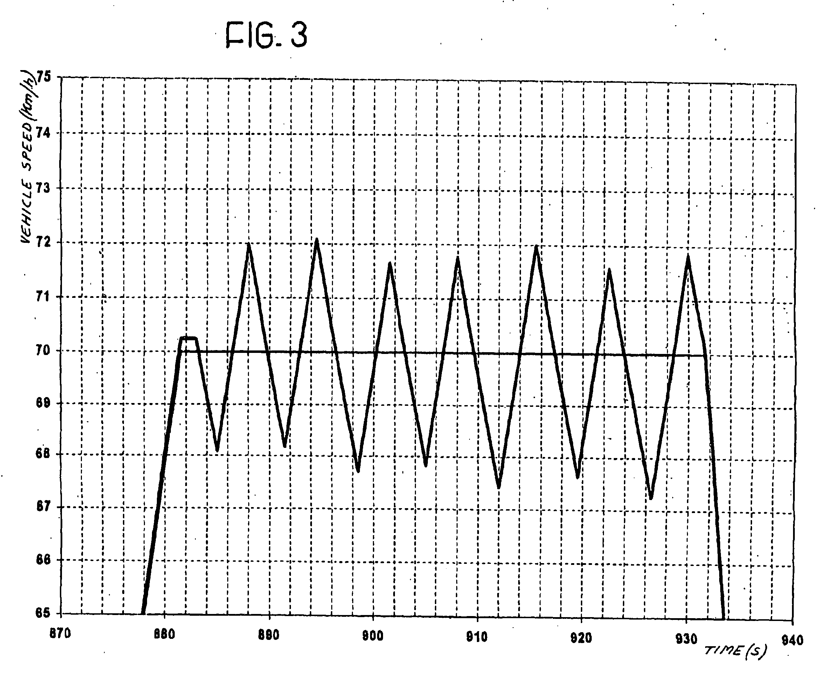

The graph of Figure 3 shows an exemplary variation of the speed v as it is controlled, as a function of time plotted along the abscissa, by means of a drive-release strategy. Figure 3 shows in particular the application of this strategy to a phase of the EUDC cycle.

The drive-release strategy is automatically performed by the system control unit SCU when the speed is lower than the predetermined value substantially according to the following conditions:

1) If the required engine torque E or the corresponding mean effective pressure (hereinafter indicated mep), which is proportional to this torque, is greater than a predetermined threshold value (hereinafter indicated mep_limit), the unit SCU controls the engine ICE by means of the management unit 3 in such a way as to achieve this required torque value;

2) If on the other hand the torque required from the engine ICE, or rather the corresponding means effective pressure is maintained below the threshold value for a time greater than a predetermined interval $\Delta\tau$, the unit SCU determines the commencement of a "release" phase, causing the servo-controlled clutch C to disengage and turning off the engine ICE;

3) The end of the "release" condition is determined by the system control unit SCU either when the torque required at the engine exceeds the threshold value (returns now to point 1) or when the effective speed v of the vehicle has fallen by more than $\Delta v$ below the value which this speed would have to assume if the required torque were to be maintained: in this case it passes to the "drive" condition described in the following point 4;

4) A "release" phase is followed by a "drive" condition; in a drive phase the unit SCU causes the engine E to deliver a suitable torque value, sufficiently close to the region of minimum specific consumption, but nevertheless such as not to cause excessively high acceleration, as a function of the gear selected and the speed of rotation of the engine;

5) The unit SCU determines the end of the "drive" condition either when the torque required from the engine ICE exceeds the threshold value (in this case it returns to point 1 above), or when the effective speed v of the motor vehicle has exceeded by $\Delta v$ the value by which this velocity would had to have assumed if the torque required from the motor had been still maintained: in this case it returns to the "release" condition (point 3) discussed above;

6) When the accelerator A is released while the required ground force $F_x$ is nil, the unit SCU immediately causes passage to a "release" condition with the servo-controlled clutch C disengaged and the engine ICE turned off.

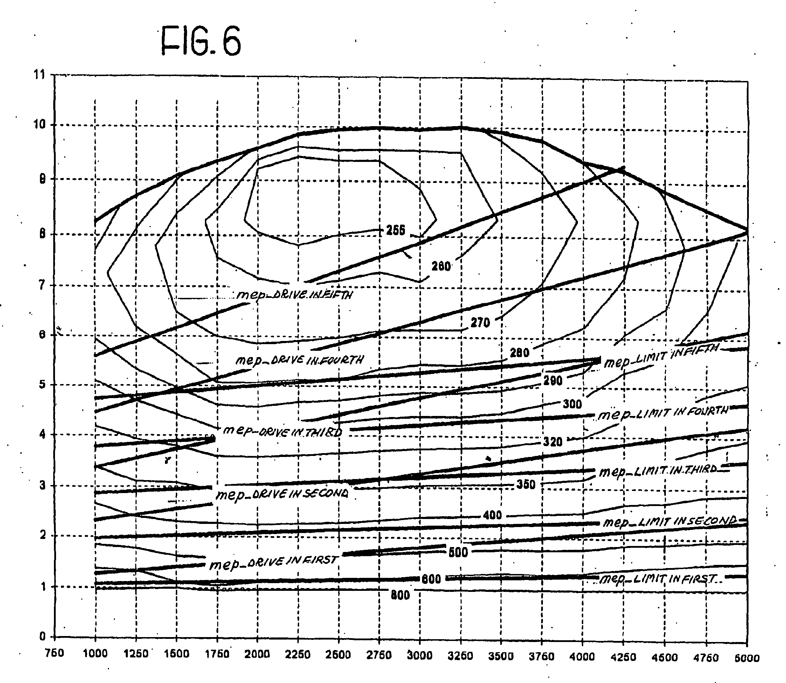

The threshold value for the torque required from the engine or the equivalent mean effective pressure mep is conveniently predetermined for a given internal combustion engine as a function of the speed of rotation of its engine shaft and the gear engaged. In Figure 6 is shown a graph which presents the threshold values mep_limit and the values of mep_drive for each gear, in relation to an internal combustion engine with five gears or speed ratios. In this graph the thin solid lines represent specific isoconsumption lines (in g/kWh). The graph of Figure 6 is conveniently tabulated or mapped in a memory M3 (Figure 1) coupled to the system control unit SCU.

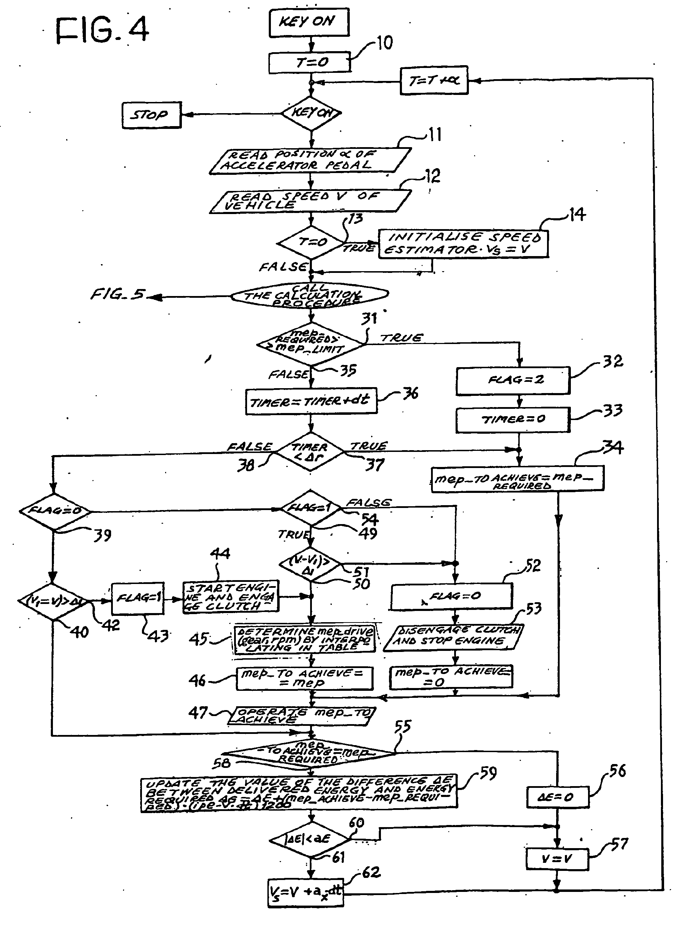

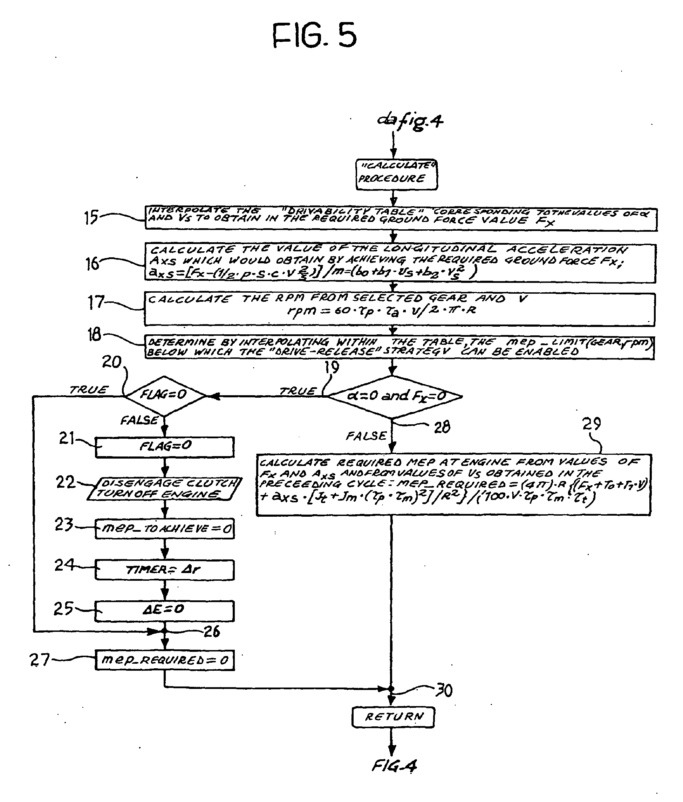

Figures 4 and 5 of the attached drawings are flow diagrams which show an exemplary mode of operation of an algorithim for implementation of the drive-release strategy described above. In these flow diagrams and in the following description of the corresponding algorithim, the following nomenclature is adopted:

| | |
|---|---|
| v | instantaneous effective speed of the vehicle |
| $v_s$ | estimated instantaneous speed |
| p | air density |
| S | frontal area of the vehicle |
| $C_x$ | co-efficient of aerodynamic resistance of the vehicle |
| R | rolling ratio of the tyres of the vehicle |
| $F_x = b_0 + b_1 \cdot v_s + b_2 \cdot v_s 2$ | ground force required to overcome the rolling friction for each kg of weight, $b_0$, $b_1$ e $b_2$ being co-efficients predetermined experimentally |
| $\tau_p$ | final ratio (at the differential) |
| $\tau_m$ | gear ratio |
| $J_t$ | moment of inertia of the transmission |
| $\eta_t$ | efficiency of the transmission |
| $T_0 + T_1 \cdot v$ | ground force required to overcome the transmission losses |
| V | engine capacity |
| $J_m$ | moment of inertia of the engine |
| mep | mean effective pressure |
| E | energy |

The algorithim illustrated by the flow diagrams of Figures 4 and 5 is performed substantially in the following manner:

- *At "key-on" set T=O (Figure 4, step 10)*
- *Repeat evenly dt seconds until the key of the starter and ignition switch is in the "run" position:*

  o *Read the position α of the accelerator pedal A at time t (Figure 4, step 11),*
  o *Read the instantaneous speed v of the vehicle at time t (step 12) ,*
  o *If T=0 (step 13) then:*

  ■ *Initialise the estimated speed $v_s$, to the read value of the instantaneous speed $v_s$=v (step 14) ,*

  ■ *Interpolate the "drivability table" in correspondence with values of α and $v_s$ to obtain the value of the required ground force $F_x$ (Figure 5 step 15),*

  ■ *Calculate the value of longitudinal acceleration $a_{xs}$ which would be obtained if the required ground force $F_x$ were achieved (Figure 5, step 16) :*

$$a_{xs} = \left[ F_x - \left( 1/2 \cdot \rho \cdot S \cdot C \cdot v_s^2 \right) \right] / m - \left( b_0 + b_1 \cdot v_s + b_2 \cdot v_s^2 \right)$$

  ■ *From the values of v and the selected gear calculate the speed of rotation n (rpm) of the engine shaft Sh of the engine ICE (Figure 5, step 17)*

$$rpm \approx 60 \cdot \tau_p \cdot \tau_m \cdot v / (2 \cdot \pi \cdot R)$$

■ *Determine by means of interpolation of the table (corresponding to Figures 6) the mep_limit (gear, rpm) below which it is possible to enable the "drive" -"release" strategy (step 18)*

■ *If $\alpha$=0 and $F_x$=0 (step 19) then*

o *If flag $\neq$0 (step 20) then*

■ *Set flag = 0: indicative of the "release" phase (step 21)*
■ *Disengage the clutch C and turn the engine ICE off (step 22),*
■ *Set mep_to_achieve = 0 (step 23) ,*
■ *Set timer = $\Delta\tau$ (step 24) ,*
■ *Set to zero the differential $\Delta E$ between energy delivered by the engine and require energy: $\Delta E = 0$ (step 25) ,*

■ *End test on flag (Figure 5, point 26) ,*

■ *Set mep_required = 0 (step 27)*

■ *Otherwise (Figure 5, step 28) :*

■ *From the values of $F_x$ and $a_{xs}$ and from the value of $v_s$ obtained in the preceding cycle, calculate the "mean effective pressure" required by the engine ICE (step 29) :*

*mep_required = $(4 \cdot \pi) \cdot R \cdot \{[F_x + T_0 + T_1 \cdot v] + a_{xs} \cdot [J_t + J_m \cdot (\tau_p \cdot \tau_m)^2] / R^2\} / (100 \cdot V \cdot \tau_p \cdot \tau_m \cdot \eta_t)$*

•*End test on $\alpha$ and $F_x$ (Figure 5, step 30).*
•*If mep_required > mep _limit then the "drive" - "release" strategy is not enabled (Figure 4, Step 31) :*

• *Set flag = 2: indicative of the normal traction phase (step 32),*
• *Set timer = 0 (Step 33) ,*
• *Set mep _ to _ achieve = mep _ required (step 34),*

• *Otherwise (that is if mep _required $\leq$ mep _limit; Figure 4, step 35) :*

*Set Timer = Timer + dt (step 36),*

• *If Timer < $\Delta\tau$ (step 37) then the "derive" - "release" strategy is not enabled:*

• *Set mep _ to _ achieve = mep _ required (step 34)*

• *Otherwise (step 38) enable the "drive" - "release" strategy:*

• *If Flag = 0 (enter "release" phase; step 39)*
• *If ($v_s$-v) <$\Delta v$ (step 40) then remain in the "release" phase (pma _to _ achieve = 0, step 41)*

• *Otherwise (step 42) pass to the "drive" phase:*

• *Set Flag = 1: indicative of the "drive" phase (step 43),*
• *Start the engine ICE and engage the clutch C (step 44),*
• *Determine, by interpolation within the table (figure 6), mep _ drive (gear rpm) (step 45),*
• *Set mep _ to _ achieve = mep _ drive (step 46),*
• *Actuate mep_ to _achieve (step 47).*

• *Otherwise if : Flag = 1 (enter "drive" phase, step 49)*

- *If (v-v_s) < Δv then remain in the "drive" phase (step 50) :*

  - *Determine by interpolation within the stable, mep _ drive (gear, rpm) , step 45,*
  - *Set: mep _ to _achieve = mep _ drive, step 46,*

- *Otherwise step into "release" phase (step 51),*

  - *Set Flag = 0: indicative of the "release" phase (step 52),*
  - *Disengage clutch C and switch off engine ICE (step 53),*
  - *Set mep _ to _ achieve = 0 (step 41),*

- *Otherwise if: Flag F= 2 (enter normal traction conditions; step 54),*

  - *Set Flag = 0: indicative of the "release" phase (step 52);*
  - *Disengage clutch C and turn off engine ICE (step 53);*
  - *Set mep _ to _ achieve = 0 (step41);*
  - *End test on Flag (point 48)*

- *If mep _ to _ achieve = mep _ required (step 55) then:*

  - *Set to 0 the differential ΔE between energy deli vered and energy required: ΔE = 0 (step 56) ,*
  - *Set $v_s$=v (step 57) ,*

- *Otherwise (step 58) :*

  - *update the value of the differential ΔE between energy delivered and energy required (step 59):*

    $$ΔE=ΔE + (mep \_ to \_ achieve) - (mep \_ required) . (rpm · V · dt) /1200$$

  - *If -δE<ΔE<δE that is to say if the succession of "release" - " drive" deliver practically the same energy as is required by the accelerator A (step 60), then:*

  - *Align the estimator of $v_s$ by setting $v_s$=v (step 57) ;*

- *Otherwise (step 61):*

  - *Update the estimate of $v_s$ by means of the relation: $v_s$= $v_s$+$a_x$ · dr (step 62) ,*
  - *Set T=T+dt (step 63) and repeat the cycle.*

Naturally, the principle of the invention remaining the same, the embodiments and details of construction can be widely varied with respect to what has been described and illustrated purely by way of non-limitative example, without by this departing from the ambit of the invention as defined in the annexed claims.

**Claims**

1. A propulsion control system for a motor vehicle provided with
   a propulsion apparatus (1) which comprises an internal combustion engine (ICE) the drive shaft (Sh) of which is connectable by means of a servo-controlled clutch (C) to a transmission (2) including a servo-assisted gearbox (G); the gearbox (G) and the clutch (C) being associated with first and second electric controlled actuators (4; 5) respectively; and
   a braking system which can be activated by means of a pedal control device (BP);
   the propulsion control system including
   an accelerator (A) to which electric position detector means (S1) are associated,
   electric sensor means (S2, S3) able to provide signals indicative of the speed of rotation (n) of the drive shaft (Sh) of the engine (ICE) and/or of the speed (v) of the motor vehicle, and the condition of actuation of the brake control pedal (BP); and
   electronic control means (SCU, 2, 3) arranged to control the propulsion apparatus (1) of the motor vehicle in a predetermined mode of operation as a function of the signals provided by the said detector means (S1) and by the sensor means (S2, S3) and to cause disengagement of the said clutch (c) when the accelerator (A) is released or not actuated and the speed (v) of the vehicle is less than the said predetermined value; the said clutch (C) being subsequently engaged as soon as the brake control pedal (BP) is actuated;

the propulsion control system being **characterized in that** the internal combustion engine (ICE) is coupled to a reversible electric machine (M) operable to function as an electricity generator and an electric motor and **in that** the said control means (SCU) are arranged to detect situations in which the speed (v) of the motor vehicle is maintained within predetermined limits below a predetermined value, and to cause the development, in the said situations, of a ground traction force ($F_x$) oscillating in a predetermined manner about an average value corresponding to the value of the speed of the motor vehicle, and to perform a drive-release strategy in which it causes release phases, in which the said clutch (C) is disengaged and the engine (ICE) is turned off, alternating with drive phases or traction force application phases in which the engine (ICE) is turned on and the clutch (C) is engaged;

the said control means (SCU) being arranged to determine an instantaneous traction force value ($F_x$) intended to be developed at the ground by the drive wheels (W) according to a predetermined function of the position ($\alpha$) of the accelerator (A) and the speed (v) of the motor vehicle;

the said control means (SU) being associated with first memory means (M1) in which are stored data able to define a map or table of driveability which correlates values of the position ($\alpha$) of the accelerator (A) and the speed (v) of the motor vehicle values of the ground force ($F_x$) and which is such that, for speed values (v) less than a predetermined value, non-negative values of the developed ground traction force ($F_x$) correspond to the position ($\alpha$) of the accelerator (A) .

2. A system according to claim 1, wherein the said control means (SCU) are arranged to
cause, by means of the said electronic control unit (3), the internal combustion engine (ICE) to be turned off whenever, whilst the speed (v) is less than the said predetermined value, the accelerator (A) is released and the said clutch (C) is disengaged, except when the clutch (C) is disengaged to perform a gear change; and
then cause restarting of the internal combustion engine (ICE) by means of the electric machine (M) now operating as a motor, and then re-engagement of the said clutch (C) as soon as the accelerator (A) is actuated.

3. A system according to Claim 1 or Claim 2, in which the said control means (SCU) are arranged to determine the gear ratio to select at the gearbox (G) in a predetermined manner according to a criterion of fuel consumption minimisation by the engine (ICE); the system including second memory means (M2) associated with the said control means (SCU), in which are stored data able to define the speed ratio or gear to select at the gearbox (G) as a function of the ground force ($F_x$) developed by the drive wheels (W) and the speed (v) of the vehicle, and in which the said control means (SCU) are arranged to determine the gear to select on the basis of data stored in the said second memory means (M2).

4. A system according to Claim 1, in which the said control means for performing the drive-release strategy are arranged to:

- acquire the position ($\alpha$) of the accelerator (A) and the speed (v) of the motor vehicle and determine a corresponding value of ground force ($F_x$) to be developed by the drive wheels (W);
- calculate the corresponding mean effective pressure (mep) or torque required at the engine (ICE) ;
- acquire or calculate the speed of rotation (n) of the engine (ICE);
- determine, from a pre-memorised table or map (M3) a limit value (mep _ limit) for the mean effective pressure (mep) of the engine (ICE) corresponding to the speed of rotation (n) of the engine (ICE) and to the gear selected at the gearbox (G); and
- commence a release phase when the calculated mean effective pressure (mep) is less than or at most equal to the said limit value (mep _ limit) for a time greater than a predetermined value ($\Delta\tau$).

5. A system according to Claim 3, in which the control means (SCU) are arranged to interrupt a release phase when the calculated mean effective pressure (mep) exceeds the most recently determined limit value (mep _ limit), and/or when the detected speed (v) of the motor vehicle falls below a predetermined threshold.

**Patentansprüche**

1. Antriebssteuerungssystem für ein Kraftfahrzeug, das ausgebildet ist mit
einer Antriebsvorrichtung (1), die einen Verbrennungsmotor (ICE) umfasst, dessen Antriebswelle (Sh) mittels einer servogesteuerten Kupplung (C) mit einem Getriebe (2) koppelbar ist, das eine servounterstützte Gebtriebeanordnung (G) umfasst; wobei die Getriebeanordnung (G) und die Kupplung (C) mit ersten und zweiten elektrisch gesteuerten Aktuatoren (4; 5) versehen ist; und

einem Bremssystem, das mittels einer Pedalsteuervorrichtung (BP) aktivierbar ist;

wobei das Antriebssteuerungssystem umfasst

eine Beschleunigungsvorrichtung (A), der elektrische Positionserfassungsmittel (S1) zugeordnet sind,

elektrische Sensormittel (S2, S3), die dazu ausgebildet sind, Signale bereitzustellen, die die Drehgeschwindigkeit (n) der Antriebswelle (Sh) des Motors (ICE) und/oder die Geschwindigkeit (v) des Kraftfahrzeugs angeben und den Zustand der Betätigung des Bremssteuerungspedals (BP); und

elektronische Steuerungsmittel (SCU, 2, 3), die dazu ausgebildet sind, die Antriebsvorrichtung (1) des Kraftfahrzeugs in einem vorbestimmten Betriebsmodus als Funktion der Signale zu steuern, die von den Erfassungsmitteln (S1) und den Sensormitteln (S2, S3) bereitgestellt werden, und um ein Ausrücken der Kupplung (C) zu bewirken, wenn die Beschleunigungsvorrichtung (A) freigegeben oder nicht betätigt wird und die Geschwindigkeit (v) des Fahrzeugs kleiner als der vorbestimmte Wert ist; wobei die Kupplung (C) in der Folge eingerückt wird, sobald das Bremssteuerungspedal (BP) betätigt wird;

wobei das Antriebssteuerungssystem **dadurch gekennzeichnet ist, dass** der Verbrennungsmotor (ICE) mit einer umkehrbaren elektrischen Maschine (M) gekoppelt ist, die derart betreibbar ist, dass sie als elektrischer Generator und als Elektromotor funktioniert, und dass

die Steuerungsmittel (SCU) derart ausgebildet sind, dass sie Situationen erfassen, in denen die Geschwindigkeit (v) des Kraftfahrzeugs innerhalb vorbestimmter Grenzwerte unterhalb eines vorbestimmten Werts aufrechterhalten wird, und derart, dass sie bewirken, dass die Entwicklung in diesen Situationen einer Bodentraktionskraft ($F_x$), die in einer vorbestimmten Weise um einen Durchschnittswert entsprechend dem Wert der Geschwindigkeit des Fahrzeugs oszilliert, und dass sie eine Antriebsfreigabestrategie ausführt, gemäß welcher sie Freigabephasen bewirkt, in denen die Kupplung (C) ausgerückt und der Motor (ICE) abgeschaltet wird, im Wechsel mit Antriebsphasen oder Traktionskraftanwendungsphasen, in denen der Motor (ICE) eingeschaltet und die Kupplung (C) eingerückt wird;

wobei die Steuerungsmittel (SCU) derart ausgebildet sind, dass sie den aktuellen Traktionskraftwert ($F_x$) bestimmen, der von den Antriebsrädern (W) am Untergrund gemäß einer vorbestimmten Funktion der Position ($\alpha$) der Beschleunigungsvorrichtung (A) und der Geschwindigkeit (v) des Kraftfahrzeugs entwickelt werden soll;

wobei die Steuerungsmittel (SU) ersten Speichermitteln (M1) zugeordnet sind, in denen Daten gespeichert sind, die dazu vorgesehen sind, um ein Fahrbarkeitskennfeld oder eine Fahrbarkeitstabelle zu definieren, die Werte der Position ($\alpha$) der Beschleunigungsvorrichtung (A) und der Geschwindigkeit (v) des Kraftfahrzeugs zu Werten der Untergrundkraft ($F_x$) in Korrelation setzt und die derart ausgebildet ist, dass bei Geschwindigkeitswerten (v) die kleiner als ein vorbestimmter Wert sind, nicht-negative Werte der entwickelten Untergrundtraktionskraft ($F_x$) zu der Position ($\alpha$) der Beschleunigungsvorrichtung (A) korrespondieren.

2. System nach Anspruch 1, wobei die Steuerungsmittel (SCU) dazu ausgebildet sind,
   um mittels der elektronischen Steuereinheit (3) zu bewirken, dass der Verbrennungsmotor (ICE) ausgeschaltet wird, wann immer die Beschleunigungsvorrichtung (A) freigegeben und die Kupplung (C) ausgerückt ist, während die Geschwindigkeit (v) kleiner als der vorbestimmte Wert ist, außer dann, wenn die Kupplung (C) ausgerückt wird, um einen Gangwechsel zu bewirken; und
   dann ein erneutes Starten des Verbrennungsmotors (ICE) mittels der nun als Motor arbeitenden elektrischen Maschine (M) zu bewirken, und dann das erneute Ineingriffbringen der Kupplung (C) bewirkt wird, sobald die Beschleunigungsvorrichtung (A) betätigt wird.

3. System nach Anspruch 1 oder 2, wobei die Steuerungsmittel (SCU) dazu ausgebildet sind, das in der Getriebeanordnung (G) auszuwählende Übersetzungsverhältnis in einer vorbestimmten Weise gemäß eines Kriteriums der Kraftstoffverbrauchminimierung durch den Motor (ICE) zu bestimmen; wobei das System zweite Speichermittel (M2) umfasst, die den Steuerungsmitteln (SCU) zugeordnet sind, in welchen Daten gespeichert sind, die dazu vorgesehen sind, um das Geschwindigkeitsverhältnis oder den in der Getriebeanordnung (G) auszuwählenden Gang als Funktion der Untergrundkraft ($F_x$) zu definieren, die von den Antriebsrädern (W) entwickelt wird, und von der Geschwindigkeit (v) des Fahrzeugs, und wobei die Steuermittel (SCU) angeordnet sind, um den auszuwählenden Gang auf Grundlage der in dem zweiten Speichermittel (M2) gespeicherten Daten zu bestimmen.

4. System nach Anspruch 1, in dem die Steuermittel zum Ausführen der Antriebsfreigabestrategie dazu ausgebildet sind, um:

   - die Position ($\alpha$) der Beschleunigungsvorrichtung (A) und die Geschwindigkeit (v) des Kraftfahrzeugs zu ermitteln und einen entsprechenden Wert der Bodenkraft ($F_x$) zu bestimmen, die durch die Antriebsräder (W) zu entwickeln ist;
- den entsprechenden mittleren effektiven Druck (mep) oder das am Motor (ICE) erforderliche Drehmoment zu berechnen;
- die Drehzahl (n) des Motors (ICE) zu ermitteln oder zu berechnen;
- aus einer vorher gespeicherten Tabelle oder einem Kennfeld (M3) einen Grenzwert (mep _ limit) für den mittleren effektiven Druck (mep) des Motors (ICE) zu bestimmen, entsprechend der Drehzahl (n) des Motors (ICE) und entsprechend des an der Getriebevorrichtung (G) auszuwählende Gangs; und
- Einleiten einer Freigabephase, wenn der berechnete mittlere effektive Druck (mep) kleiner oder zumindest gleich dem Grenzwert (mep _ limit) über eine Zeit ist, die größer als ein vorbestimmter Wert ist ($\Delta$T).

5. System nach Anspruch 3, wobei die Steuerungsmittel (SCU) ausgebildet sind, um eine Freigabephase zu unterbrechen, wenn der berechnete mittlere effektive Druck (mep) den zuletzt bestimmten Grenzwert (mep_limit) überschreitet und/oder wenn die erfasste Geschwindigkeit (v) des Kraftfahrzeugs unter einen vorbestimmten Schwellenwert fällt.

## Revendications

1. Système de commande de propulsion pour un véhicule à moteur pourvu
   d'un dispositif de propulsion (1) qui comprend un moteur à combustion interne (ICE), dont l'arbre moteur (Sh) peut être connecté au moyen d'un embrayage servo-commandé (C) à une transmission (2) incluant un boîte de vitesses servo-assistée (G) ; la boîte de vitesses (G) et l'embrayage (C) étant associés respectivement avec des premier et second actionneurs (4, 5) commandés électriquement ; et
   d'un système de freinage qui peut être actionné au moyen d'un dispositif de commande à pédale (BP) ;
   le système de commande de propulsion incluant
   un accélérateur (A) auquel des moyens de détecteur de position électriques (S1) sont associées ;
   des moyens de capteur électriques (S2, S3) pouvant fournir des signaux indicatifs de la vitesse de rotation (n) de l'arbre moteur (Sh) du moteur (ICE) et/ou de la vitesse (v) du véhicule à moteur, et de l'état d'actionnement de la pédale de commande de frein (BP) ; et
   des moyens de commande électroniques (SCU, 2, 3) agencés pour commander le dispositif de propulsion (1) du véhicule à moteur dans un mode prédéterminé de fonctionnement en fonction des signaux fournis par lesdits moyens de détecteur (S1) et par les moyens de capteur (S2, S3) et pour provoquer une venue hors de prise dudit embrayage (C) quand l'accélérateur (A) est relâché ou non actionné et la vitesse (v) du véhicule est inférieure à ladite valeur prédéterminée ; ledit embrayage (C) venant ensuite en prise dès que ladite pédale de commande de frein (BP) est actionnée ;
   le système de commande de propulsion étant **caractérisé en ce que** le moteur à combustion interne (ICE) est couplé à une machine électrique réversible (M) pouvant fonctionner comme un générateur d'électricité et un moteur électrique et **en ce que**
   lesdits moyens de commande (SCU) sont agencés pour détecter des situations dans lesquelles la vitesse (v) du véhicule à moteur est maintenue dans des limites prédéterminées sous une valeur prédéterminée, et pour provoquer le développement, dans lesdites situations, d'une force de traction au sol (Fx) oscillant d'une manière prédéterminée autour d'une valeur moyenne correspondant à la valeur de la vitesse du véhicule à moteur, et pour réaliser une stratégie de libération d'entraînement dans laquelle ils provoquent des phases de relâchement, dans lesquelles ledit embrayage (C) vient hors de prise et le moteur (ICE) est éteint, alternant avec des phases d'entraînement ou des phases d'application de force de traction dans lesquelles le moteur (ICE) est allumé et l'embrayage (C) est en prise ;
   lesdits moyens de commande (SCU) étant agencés pour déterminer une valeur de force de traction instantanée (Fx) prévue pour être développée au sol par les roues motrices (W) selon une fonction prédéterminée de la position ($\alpha$) de l'accélérateur (A) et la vitesse (v) du véhicule à moteur ;
   lesdits moyens de commande (SU) étant associés avec des premiers moyens de mémoire (M1) dans lesquels sont stockées des données pouvant définir une application ou un tableau de manoeuvrabilité qui corrèle des valeurs de la position ($\alpha$) de l'accélérateur (A) et de la vitesse (v) du véhicule à moteur à des valeurs la force de sol (Fx) et qui est tel que, pour des valeurs de vitesse (v) inférieures à une valeur prédéterminée, des valeurs non négatives de la force de traction au sol (Fx) développée correspondent à la position ($\alpha$) de l'accélérateur (A).

2. Système selon la revendication 1, dans lequel lesdits moyens de commande (SCU) sont agencés pour provoquer, au moyen de ladite unité de commande électronique (3), l'extinction du moteur à combustion interne (ICE) si, alors que la vitesse (v) est inférieure à ladite valeur prédéterminée, l'accélérateur (A) est relâché et ledit embrayage (C) vient hors de prise, sauf quand l'embrayage (C) vient hors de prise pour réaliser un changement de vitesse ; et
ensuite provoquer le redémarrage du moteur à combustion interne (ICE) au moyen de la machine électrique (M) fonctionnant maintenant comme un moteur, et ensuite la revenue en prise dudit embrayage (C) dès que l'accélérateur (A) est actionné.

3. Système selon la revendication 1 ou la revendication 2, dans lequel lesdits moyens de commande (SCU) sont agencés pour déterminer le rapport de vitesses à sélectionner au niveau de la boîte de vitesses (G) d'une manière prédéterminée selon un critère de minimisation de la consommation de carburant par le moteur (ICE) ; le système incluant des seconds moyens de mémoire (M2) associés avec lesdits moyens de commande (SCU), dans lesquels sont stockées des données pouvant définir le rapport ou la vitesse à sélectionner au niveau de la boîte de vitesses (G) en fonction de la force au sol (Fx) développée par les roues motrices (W) et de la vitesse (v) du véhicule, et dans lequel lesdits moyens de commande (SCU) sont agencés pour déterminer quelle vitesse sélectionner en fonction des données stockées dans lesdits seconds moyens de mémoire (M2).

4. Système selon la revendication 1, dans lequel lesdits moyens de commande pour réaliser la stratégie de libération d'entraînement sont agencés pour :

   acquérir la position ($\alpha$) de l'accélérateur (A) et la vitesse (v) du véhicule à moteur et déterminer une valeur correspondante de la force au sol (Fx) à développer par les roues motrices (W) ;
   calculer la pression efficace moyenne correspondante (pem) ou le couple requis au niveau du moteur (ICE) ;
   acquérir ou calculer la vitesse de rotation (n) du moteur (ICE) ;
   déterminer, à partir d'un tableau ou d'une application (M3) pré-mémorisé une valeur limite (pem_limit) pour la pression efficace moyenne (pem) du moteur (ICE) correspondant à la vitesse de rotation (n) du moteur (ICE) et à la vitesse sélectionnée au niveau de la boîte de vitesses (G) ; et
   commencer une phase de libération quand la pression efficace moyenne calculée (mep) est inférieure ou au plus égale à ladite valeur limite (mep_limit) pour un temps supérieur à une valeur prédéterminée ($\Delta\tau$).

5. Système selon la revendication 3, dans lequel les moyens de commande (SCU) sont agencés pour interrompre une phase de relâchement quand la pression efficace moyenne calculée (mep) dépasse la valeur limite (mep_limit) la plus récemment déterminée, et/ou quand la vitesse (v) détectée du véhicule à moteur tombe sous un seuil prédéterminé.

# FIG. 1

FIG. 2

# FIG. 3

# FIG. 4

KEY ON

T = 0 — 10

T = T + α

KEY ON → STOP

READ POSITION α OF ACCELERATOR PEDAL — 11

READ SPEED V OF VEHICLE — 12

T = 0 — 13 — TRUE → INITIALISE SPEED ESTIMATOR · $V_S = V$ — 14

FALSE

CALL THE CALCULATION PROCEDURE → FIG. 5

mep REQUIRED > mep_LIMIT — 31 — TRUE → FLAG = 2 — 32

FALSE — 35

TIMER = TIMER + dt — 36

TIMER = 0 — 33

FALSE — 38 — TIMER < Δr — TRUE — 37

mep_TO ACHIEVE = mep_REQUIRED — 34

FLAG = 0 — 39

FLAG = 1 — 54 — FALSE

TRUE — 49

$(V - V_1) > Δ_1$ — 51 — 50

FLAG = 0 — 52

$(V_1 = V) > Δ_1$ — 40

FLAG = 1 — 42 — 43

START ENGINE AND ENGAGE CLUTCH — 44

DETERMINE mep_drive (gear rpm) BY INTERPOLATING IN TABLE — 45

DISENGAGE CLUTCH AND STOP ENGINE — 53

mep_TO ACHIEVE = mep — 46

mep_TO ACHIEVE = 0

OPERATE mep_TO ACHIEVE — 47

mep_TO ACHIEVE = mep_REQUIRED — 55

58

UPDATE THE VALUE OF THE DIFFERENCE ΔE BETWEEN DELIVERED ENERGY AND ENERGY REQUIRED ΔE = ΔE + (mep_ACHIEVE − mep_REQUIRED)·(ipe·V·dt)/1200 — 59

ΔE = 0 — 56

$|ΔE| < ∂E$ — 60 — 61

V = V — 57

$V_S = V + a_x dt$ — 62

EP 1 491 788 B1

# FIG. 5

da fig.4

"CALCULATE"
PROCEDURE

15 — INTERPOLATE THE "DRIVABILITY TABLE" CORRESPONDING TO THE VALUES OF $\alpha$ AND $V_S$ TO OBTAIN IN THE REQUIRED GROUND FORCE VALUE $F_x$

16 — CALCULATE THE VALUE OF THE LONGITUDINAL ACCELERATION $A_{XS}$ WHICH WOULD OBTAIN BY ACHIEVING THE REQUIRED GROUND FORCE $F_x$;
$a_{xs} = [F_x - (1/2 \cdot p \cdot S \cdot c \cdot v_s^2)]/m = (b_0 + b_1 \cdot v_s + b_2 \cdot v_s^2)$

17 — CALCULATE THE RPM FROM SELECTED GEAR AND $V$
$rpm = 60 \cdot \tau_p \cdot \tau_a \cdot v/2 \cdot \pi \cdot R$

18 — DETERMINE BY INTERPOLATING WITHIN THE TABLE, THE $mep\_LIMIT(GEAR, rpm)$ BELOW WHICH THE "DRIVE-RELEASE" STRATEGY CAN BE ENABLED

20

TRUE — FLAG=0 ← TRUE — 19 — $\alpha=0$ and $F_x=0$

FALSE

21 — FLAG=0

22 — DISENGAGE CLUTCH TURN OFF ENGINE

23 — $mep\_TO ACHIEVE = 0$

24 — $TIMER = \Delta r$

25 — $\Delta E = 0$

26

27 — $mep\_REQUIRED = 0$

FALSE — 28

29

CALCULATE REQUIRED MEP AT ENGINE FROM VALUES OF $F_x$ AND $A_{XS}$ AND FROM VALUES OF $V_S$ OBTAINED IN THE PRECEEDING CYCLE: $mep\_REQUIRED = (4\pi) \cdot R \{(F_x + T_0 + T_1 \cdot v) + a_{xs} \cdot [J_t + J_m \cdot (\tau_p \cdot \tau_m)^2]/R^2\}/(100 \cdot v \cdot \tau_p \cdot \tau_m \cdot \tau_t)$

30

RETURN

FIG.4

16

FIG.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 19507622 A
- EP 1248021 A1